# EUROPÄISCHE PATENTSCHRIFT

(11) **EP 3 566 618 B1**
(45) Veröffentlichungstag und Bekanntmachung des Hinweises auf die Patenterteilung: **08.11.2023**
(21) Anmeldenummer: 19000192.5
(22) Anmeldetag: 19.04.2019
(51) Int. Cl.: A47B 87/00

(54) **VORRICHTUNG ZUM LÖSBAREN UND EINHÄNGENDEN VERBINDEN VON MINDESTENS ZWEI BENACHBART ANORDENBAREN MÖBELSTÜCKEN**
DEVICE FOR DETACHABLY CONNECTION OF AT LEAST TWO ADJACENT PIECES OF FURNITURE BY MEANS OF MOUNTING
DISPOSITIF DE RACCORDEMENT DÉTACHABLE ET SUSPENDU D'AU MOINS DEUX PIÈCES DE MEUBLE POUVANT ÊTRE DISPOSÉES ADJACENTES

(30) Priorität: 20.04.2018 DE 102018003214
(43) Veröffentlichungstag der Anmeldung: 13.11.2019
(73) Patentinhaber: Brunner GmbH, 77866 Rheinau (DE)
(72) Erfinder: Brunner, Marc, 77866 Rheinau (DE)
(74) Vertreter: Thämer, Wolfgang

(56) Entgegenhaltungen:
- DE-U1-202005 012 533
- US-A- 3 342 147
- US-A- 3 915 100

## Beschreibung

Die Erfindung betrifft eine Vorrichtung zum lösbaren und einhängenden Verbinden von mindestens zwei benachbart anordenbaren Möbelstücken in einer geometrischen Ebene, wobei die Vorrichtung einen ortsfesten Kombizapfen, eine Verbindungslasche und ein Verrigelungselement aufweist.

Aus der DE 20 2005 012 533 U1 ist eine Vorrichtung zum lösbaren Verbinden von Tischen bekannt. Hierzu ist an jedem der beiden zu verbindenden Tische ein Ausleger über seinen Lagerkopf - rastend an dessen Zahnkranz - schwenkbar gelagert. Der Ausleger weist an seinem freien Ende einen bogenförmigen Eingriff auf, der in einer Rastnase endet. Beim Kuppeln zweier Tische werden die Ausleger beider Tische jeweils in die Rastausnehmungen des anderen Tisches am jeweiligen Zahnkranz eingehakt. Ein alternativer Ausleger hat an seinem freien Ende zwei einander gegenüberliegende Rastkerben. Der Lagerkopf hat eine zu den Rastkerben passende Rastausnehmung. Beim Kuppeln zweier Tische werden die Ausleger des einen Tisches in die Rastausnehmungen des anderen Tisches durch Tischerücken eingeschoben und verrastet.

Die US 3 342 147 A beschreibt einen modularen Tisch, an dessen Tischplattenunterseite in Tischkantennähe mindestens ein Beschlag mit einer Schwenkplatte angeordnet ist. Der einzelne Beschlag besteht aus einem quaderförmigen Körper mit einer trichterförmigen Ausnehmung und einer über die Tischkante überstehenden Lagergabel. In der Lagergabel ist eine Lasche eingehängt, die an ihrem freien Ende zwei einander gegenüberliegende Kegelzapfen aufweist. Bei einem ungenutzten Beschlag liegt die Lasche vor dem Körper, wobei der dem Körper zugewandte Kegelzapfen in dessen Ausnehmung anliegt und dort magnetisch gehalten wird. Wird ein erster Tisch an einen zweiten angekuppelt, wird die Lasche um 180 Winkelgrade geschwenkt, bis deren Kegelzapfen in der Ausnehmung des Beschlags des zweiten entsprechend positionierten Tisches eintaucht, um dort wiederum magnetisch gehalten zu werden.

Der vorliegenden Erfindung liegt die Problemstellung zugrunde, eine Vorrichtung zum lösbaren Verbinden vom mindestens zwei benachbart anordenbaren Möbelstücken zu entwickeln, mit der das Verbinden auf eine einfache und selbsterklärende Weise möglich ist.

Diese Problemstellung wird mit den Merkmalen des Anspruchs 1 gelöst. Dabei lagert jedes der zu verbindenden Möbelstücke am ortsfesten Kombizapfen die daran schwenkbare - in mindestens einer Position verrastenden - Verbindungslasche. An ihrem freien Ende hat die Verbindungslasche eine Einhängeausnehmung. Der Kombizapfen weist einen Lagerbolzen auf. Der Kombizapfen eines ersten Möbelstücks ist in die Einhängeausnehmung der Verbindungslasche eines zweiten Möbelstücks eingehängt oder er ist eingehängt und mittels eines Verriegelungselements verriegelt. Das Verriegelungselement ist ein Schwenkknopf, der exzentrisch auf dem Kombizapfen schwenk- und verrastbar gelagert ist.

Mit der Verbindungsvorrichtung werden nebeneinanderstehende Möbelstücke miteinander verbunden, sofern sie die Verbindungsvorrichtungen tragende Flächen aufweisen, die in einer geometrischen Ebene liegen. Jedes der nebeneinanderstehenden Möbelstücke weist eine Verbindungsvorrichtung auf, wobei zwischen den Verbindungsvorrichtungen die die Möbelstücke trennenden Möbelkanten liegen. Die Verbindungsvorrichtung eines jeden Möbelstücks hat einen Kombizapfen und eine Verbindungslasche, wobei der Kombizapfen zum einen die Verbindungslasche um 360 Winkelgrade um eine zur Befestigungsfläche der Verbindungsvorrichtung orientierte Normale drehbar lagert. Zum anderen umfasst der Kombizapfen einen Lagerbolzen, in den eine Verbindungslasche einhängbar ist.

Zum Verbinden zweier Möbelstücke wird die Verbindungslasche einer ersten Verbindungsvorrichtung in den Lagerbolzen einer zweiten Verbindungsvorrichtung eingehängt. Die Verbindungslasche der zweiten Verbindungsvorrichtung bleibt hierbei ungenutzt. Der kürzeste Abstand der beiden Möbelstücke ist nach dem Einhängen der Verbindungslasche kleiner als 1 mm.

In den Ausführungsbeispielen sind die Möbelstücke mehrfach kuppelbare Tische. Die Tische haben Tischplatten, die in der Draufsicht beispielsweise rechteckig, quadratisch, dreieckig oder trapezförmig sind. Ggf. können die Tische in der Draufsicht auch gekrümmte Tischkanten haben, wenn Tische mit konkaven Kanten neben Tische mit konvexen Kanten gestellt werden sollen. Die Tische tragen die Verbindungsvorrichtungen an den Unterseiten ihrer Tischplatten. In der Regel sind die Verbindungsvorrichtungen zumindest bei Tischen mit geraden Tischkanten in den Tischecken positioniert. Bei langen Tischen können entlang der langen Tischkanten auch mehr als zwei Verbindungsvorrichtungen angeordnet sein. Es ist auch möglich Tischplatten ohne Tischbeine oder ein montiertes Traggestell - sogenannte Einhängeplatten - über die Verbindungsvorrichtungen miteinander zu verbinden.

Zum Verbinden zweier Tische oder Tischplatten werden die Verbindungslaschen der Tischkanten des ersten Tisches an ihren Kombizapfen, ggf. rastend, so weit nach außen geschwenkt, dass ihre Einhängeausnehmungen in der Regel den maximalen Abstand von der Tischkante des die Verbindungslaschen tragenden Tisches haben. Der zweite Tisch wird wenige Zentimeter angehoben und an die Tischkante des ersten Tisches herangeführt. Sobald die Tischkanten der beiden Tische - in der Draufsicht von oben - nahezu deckungsgleich sind, wird der zweite Tisch abgestellt. Dabei tauchen die Lagerbolzen des zweiten Tisches in die Einhängeausnehmungen des ersten Tisches kuppelnd ein.

In den Ausführungsbeispielen sind auf den Lagerbolzen ergonomisch geformte Verriegelungselemente befestigt. Diese können durch eine manuelle Schwenkbewegung in eine Verriegelungsposition gebracht werden. Sowohl zum kuppelnden Einhängenden als auch zum manuellen Schwenken der Verriegelungselemente müssen die Tischaufsteller die unter den Tischplatten montierten Verbindungsvorrichtungen nicht optisch überwachen.

Weitere Einzelheiten der Erfindung ergeben sich aus den Unteransprüchen und der nachfolgenden Beschreibung einer schematisch dargestellten Ausführungsform.
- Figur 1:: perspektivische Ansicht einer Verbindungsvorrichtung mit Verriegelungselement;
- Figur 2:: perspektivische Ansicht einer Verbindungsvorrichtung ohne Verriegelungselement;
- Figur 3:: perspektivische Explosionsunteransicht der Verbindungsvorrichtung nach Figur 1;
- Figur 4:: perspektivische Explosionsoberansicht eines Teils der Verbindungsvorrichtung nach Figur 1;
- Figur 5:: Seitenansicht des Kombizapfens nach Figur 4;
- Figur 6:: Längsschnitt durch zwei Verbindungsvorrichtungen mit Verriegelungselementen;
- Figur 7:: vergrößerter Längsschnitt durch ein Verriegelungselement mit Metallanschlag;
- Figur 8:: Querschnitt durch die Verbindungsvorrichtung in Höhe eines ausgerasteten Doppelgesperres;
- Figur 9:: perspektivischer Unteransichtsausschnitt von zwei miteinander verbundenen Tischenausschnitten.

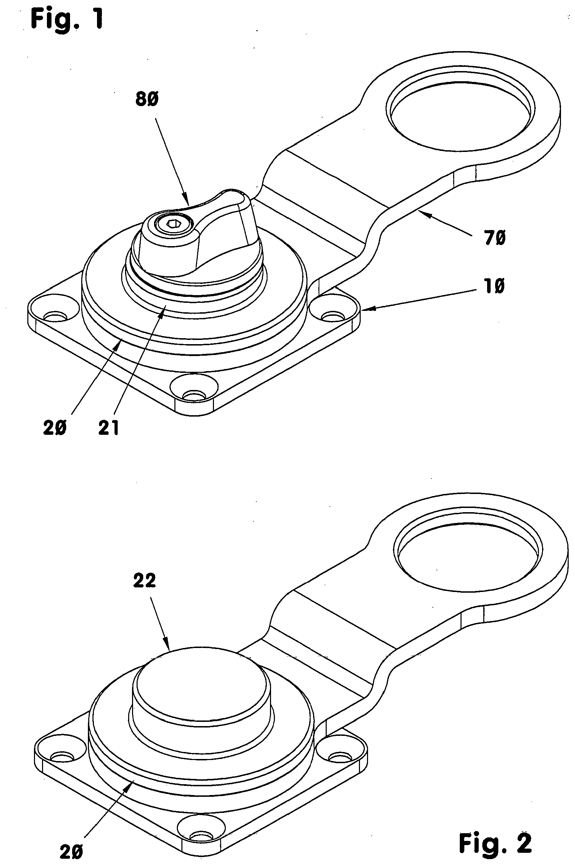

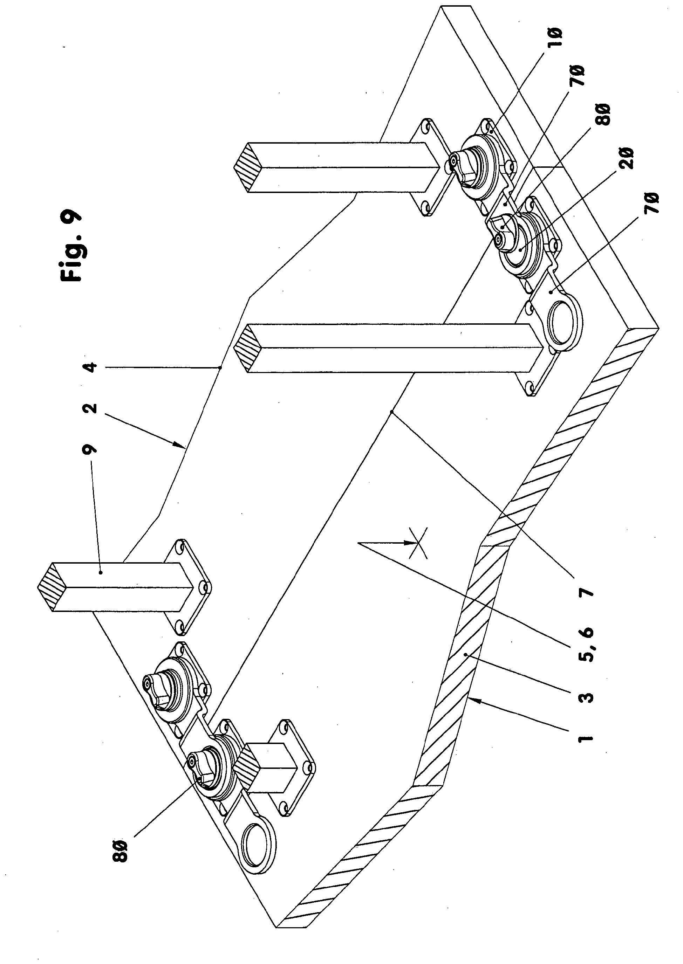

Die Figuren 1 und 2 zeigen jeweils eine Vorrichtung zum Verbinden von zwei benachbart angeordneten Möbelstücken. Die Möbelstücke sind im Ausführungsbeispiel zwei Tische (1, 2), die auf dem Rücken liegend in Figur 9 in teilgekoppelter Position dargestellt sind. Die beispielsweise in einzelnen Tischplattenecken fest montierten Verbindungsvorrichtungen umfassen jeweils eine ausschwenkbare Verbindungslasche (70), über die sie mit dem Lagerbolzen (21) der Verbindungsvorrichtung des Nachbartisches kuppelbar sind.

Die Verbindungsvorrichtung nach Figuren 1, 3 und 4 umfasst vier größere Bauteile. Das sind eine Basisplatte (10), ein Kombizapfen (20) mit einem Rastgesperre (60), eine Verbindungslasche (70) und ein Verriegelungselement (80). Die Verbindungsvorrichtung nach Figur 2 verzichtet auf ein Verriegelungselement.

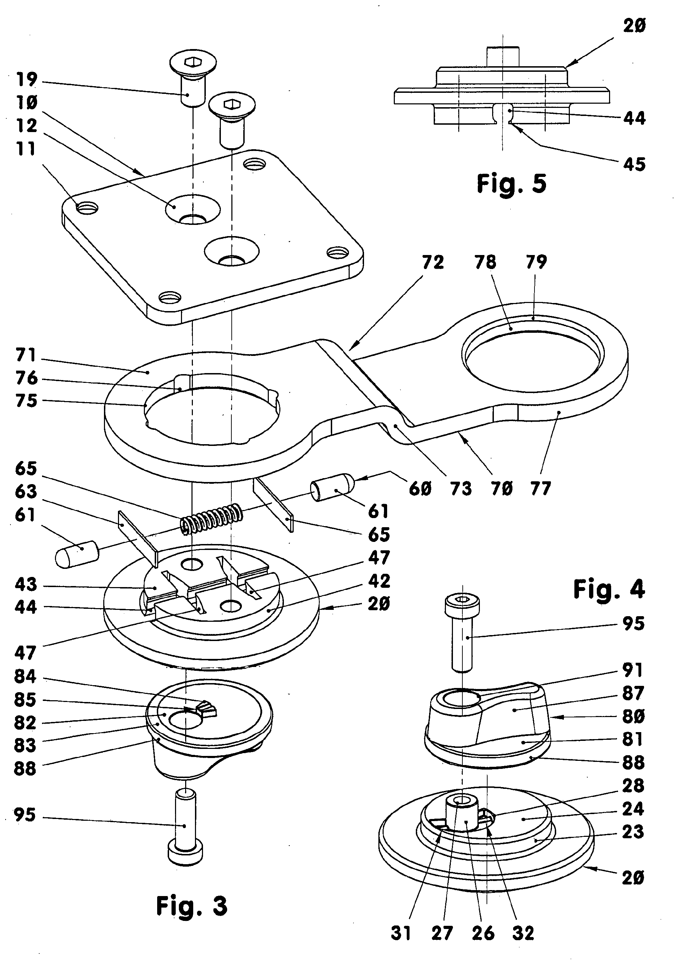

Die Basisplatte (10) ist eine quaderförmige Platte mit quadratischer Grundfläche, vgl. Figur 3. Sie ist z.B. aus dem Baustahl S235JR gefertigt. Die Maße der Basisplatte (10) betragen z.B. 60 mm * 60 mm * 4 mm. Die Ecken der Basisplatte (10) haben einen Eckradius von 6,5 mm. In jedem Eckbereich weist die Oberseite eine Oberseitenbohrung (11) für eine Schraube mit einem 5 mm-Schaft auf. Alle Oberseitenbohrungen (11) liegen auf einem Kreis mit einem Durchmesser von z.B. 66,5 mm. Die Unterseite der Basisplatte (10) hat im inneren Bereich zwei Unterseitenbohrungen (12). Beide Bohrungen haben einen Durchmesser von z.B. 6,6 mm und liegen auf der Plattenhalbierenden, wobei sie vom Plattenzentrum jeweils 11 mm entfernt sind. Alle sechs Bohrungen sind Senkbohrung.

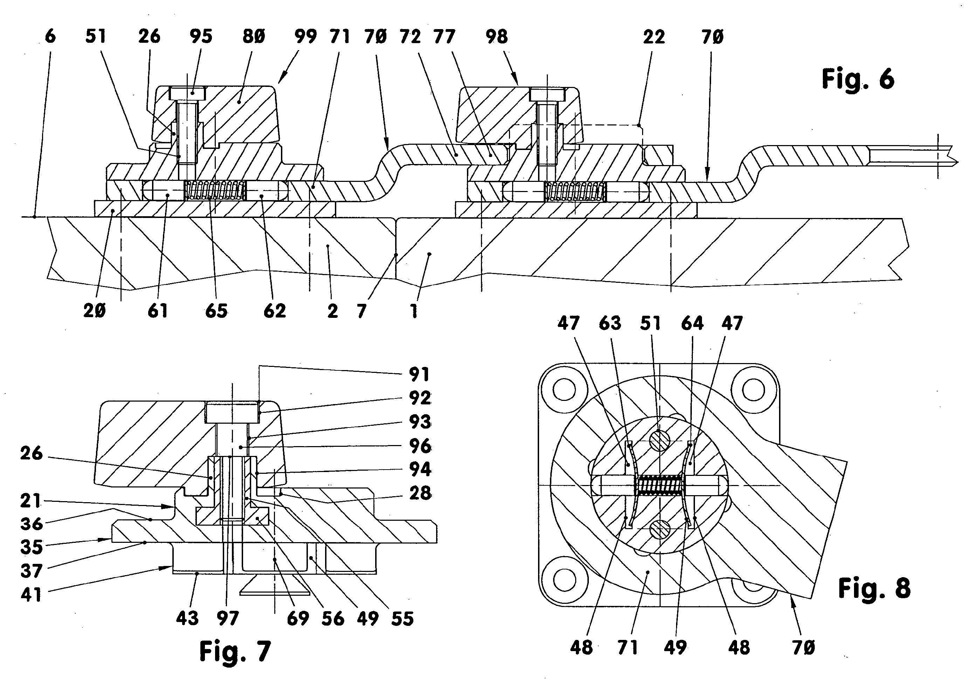

Auf der Basisplatte (10) ist der Kombizapfen (20) starr befestigt. Der Kombizapfen (20), der z.B. aus dem Kunststoff Polyamid 30 spritzgegossen ist, besteht - gemäß Figuren 6 und 7 als einstückiges Teil - aus einem Lagerbolzen (21), einer Fixierscheibe (35) und einem Schwenklagerzapfen (41), wobei letzterer auf der Basisplatte (10) aufliegt. Alle drei Teile sind konzentrisch zueinander angeordnet und haben jeweils eine zylindrische Außenwandung.

Der oberste Bereich des Kombizapfens (20), der Lagerbolzen (21), hat bei einer Höhe von z.B. 5,2 mm einen Durchmesser von z.B. 33 mm. Seine zylindrische Außenwandung (23) hat gegenüber seiner Lagerbolzenstirnfläche (24) eine 1x45°-Fase. In der ebenen Lagerbolzenstirnfläche (24) ist eine z.B. 2 mm tiefe Anschlageinsenkung (28) angeordnet. Letztere umgibt bereichsweise einen Schwenkzapfen (26), der eine zentrale Schwenkzapfenbohrung (27) aufweist. Die durch das Bauteil durchgehende Schwenkzapfenbohrung (27), die bereichsweise ein Innengewinde hat, ist mit ihrer Mittellinie gegenüber der Mittellinie (69) des Kombizapfens (20) z.B. 7 mm versetzt. Der Schwenkzapfen (26) hat einen Durchmesser von z.B. 8 mm und steht z.B. 5,1 mm über die Lagerbolzenstirnfläche über. Die Mittellinie des Schwenkzapfens (26) schneidet eine im Schwenklagerzapfen (41) eingearbeitete Führungsnut (44) senkrecht in deren Querschnittsmitte.

Die Anschlageinsenkung (28) ist ein Kreisringstück, dessen teilzylindrische Innenwandung einen Durchmesser von z.B. 16 mm aufweist. Der Zentriwinkel des Kreisringstücks beträgt 220 Winkelgrade. Die Mitte des Zentriwinkels ist quer zur Längsrichtung der Führungsnut (44) des Schwenklagerzapfens (41) orientiert.

Auf dem Grund der Anschlageinsenkung (28) befinden sich zwei Endanschlagrastnasen (31, 32). Sie stehen über den Grund als liegende Halbzylinder über. Dabei fluchten die Mittellinien der Mäntel der Halbzylinder zueinander. Diese Mittellinien sind zum einen parallel zur Längsrichtung der Führungsnut (44) und schneiden zum anderen die Mittellinie des Schwenkzapfens (26) senkrecht. Die Halbzylinder bzw. die Endanschlagrastnasen (31, 32) haben einen Radius von z.B. 0,7 mm. Um dieses Maß stehen sie maximal über den Grund über.

Die Fixierscheibe (35) hat bei einer Stärke von z.B. 4 mm einen Durchmesser von 54 mm. Sie weist eine Auflageplanfläche (36) auf, die über eine Radiusausrundung in die Außenwandung (23) des Lagerbolzens (21) übergeht. Die Unterseite der Fixierscheibe (35) ist die Schwenklagerplanfläche (37), die zur Oberseite der Basisplatte (10) hin orientiert ist.

An der Schwenklagerplanfläche (37) schließt sich die zylindrische Zapfenaußenwandung (42) des Schwenklagerzapfens (41) an. In der Unterseite des Kombizapfens (20), der Schwenklagerstirnfläche (43), sind zwei Gewindebohrungen (51), zwei Blattfederaussparungen (47) und die Führungsnut (44) eingearbeitet. Die z.B. maximal 5 mm breite Führungsnut (44) durchquert den Schwenklagerzapfen (41), wobei ihr Nutgrund in der Ebene der Schwenklagerplanfläche (37) liegt. Sie hat im Wesentlichen einen rechteckigen Querschnitt, der trotz der Nuttiefe von zum Beispiel 5,1 mm nur z.B. 4,7 mm tief ist. Dabei sind die Nutkanten entlang des Nutgrundes mit Radien von 1 mm ausgerundet. Zur Schwenklagerstirnfläche (43) ist die Führungsnut (44) auf einer Breite von 3 mm durchgehend offen, so dass die einander gegenüberliegenden Nutwandungen in jeweils 1 mm tiefe Hintergriffe (45) übergehen. Die Übergänge zwischen den Hintergriffen (45) und den seitlichen Nutwandungen sind - zur sicheren Lagerung verschiedener Rastgesperreteile (61, 62, 65) - mit einem Radius von z.B. 1,5 mm ausgerundet.

Quer zur Führungsnut (44) sind beidseits der Mittellinie (69) die beiden Blattfederaussparungen (47) angeordnet. Die Tiefe der einzelnen Blattfederaussparung (47) entspricht der Höhe des Schwenklagerzapfens (41). Jede Blattfederaussparung (47) ist z.B. 6,9-mal so lang wie breit. Die Länge misst im Ausführungsbeispiel 22 mm. Jede Blattfederaussparung (47) hat eine lange Planwandung (48). Gegenüber Letzterer befindet sich als Wandung eine Wölbungsfläche (49). Die Wölbungsfläche (49) hat einen Krümmungsradius von z.B. 29 mm. Beide Planwandungen (48) sind von der Mittellinie z.B. 8,5 mm entfernt.

In beide Blattfederaussparungen (47) ist je eine Blattfeder (63, 64) eingelegt. Die Blattfedern (63, 64), die z.B. aus dem Federstahl C100S gefertigt sind, haben im unbelasteten Zustand die Abmessungen 21 mm * 5 mm * 0,6 mm. Zwischen beiden Blattfedern (63, 64) sitzt verliersicher, in Reihe geschaltet und nur geringfügig vorgespannt, die Rastfeder (65). Dabei liegen die Blattfedern (63, 64) jeweils an den Planwandungen (48) ihrer Blattfederaussparungen (47) an. In die beiden außerhalb der Blattfedern (63, 64) liegenden Bereiche der Führungsnut (44) sind je ein Rastbolzen (61, 62) als Sperrer des doppelten Rastgesperres (60) eingelegt.

Die Rastbolzen (61, 62) sind zylindrische Bolzen, die bei einem Durchmesser von z.B. 5 mm eine Länge von 11 mm haben. Die bezüglich der Führungsnut (44) jeweils außenliegenden Stirnflächen des einzelnen Rastbolzens (61, 62) sind als rastfähige Halbkugeln gestaltet.

Bei der montierten Verbindungsvorrichtung ist die Verbindungslasche (70) dauerhaft und schwenkbar zwischen der Basisplatte (10) und dem Kombizapfen (20) gelagert. Die z.B. 141 mm lange Verbindungslasche (70) ist eine zweifach gebogene Blechlasche, die an einem Ende einen ringförmigen Schwenklagerabschnitt (71) mit einer Schwenklagerbohrung (75) und am anderen Ende einen ebenfalls ringförmigen Einhängeabschnitt (77) mit einer Einhängeausnehmung (78) aufweist. Dazwischen liegt als Verbindungssteg ein Übergangsabschnitt (72) mit einem Doppelknick (73), über den die Mittelebene des Schwenklagerabschnitts (71) um z.B. 9,1 mm auf die Mittelebene des Einhängeabschnitts (77) angehoben wird. Die Verbindungslasche (70) ist aus einem thermomechanisch gewalzten Baustahl mit hoher Streckgrenze, z.B. S420MC, hergestellt. Ihre Wandstärke misst zum Beispiel 5 mm.

Die Schwenklagerbohrung (75) hat einen Durchmesser von zum Beispiel 34 mm. Sie hat auf der Seite, die - nach Figur 6 - dem höher gelegenen Einhängeabschnitt (77) zugewandt ist, eine 1x45°-Fase. Zudem weist die Schwenklagerbohrung (75) im Ausführungsbeispiel vier Bohrungsrastkerben (76) auf. Die Bohrungsrastkerben (76) haben einen Radius von z.B. 2,5 mm, wobei die fiktive Mittellinie jeder Bohrungsrastkerbe (76) auf einem zur Schwenklagerbohrung (75) konzentrischen Zylindermantel liegt, dessen Radius z.B. 15,7 mm beträgt.

Alternativ hierzu kann die Bohrungsrastkerbe (76) zur besseren Zentrierung der Sperrer des Rastgesperres (60) zusätzlich gerade Flanken haben. Dazu hat die Bohrungsrastkerbe (76) einen Bogen mit dem Radius von z.B. 2 mm, wobei die fiktive Mittellinie jeder Bohrungsrastkerbe (76) auf einem zur Schwenklagerbohrung (75) konzentrischen Zylindermantel liegt, dessen Radius hier 16,6 mm beträgt. Sie geht in die Schwenklagerbohrung (75) mit den beiden geraden Flanken über, wobei Letztere einen Winkel von z.B. 66 Winkelgraden einschließen und tangential aus dem zum 2 mm-Radius gehörenden Bogen hervorgehen.

Die Bohrungsrastkerben (76) haben im Ausführungsbeispiel einen Teilungswinkel von jeweils 90 Winkelgraden. Zwei Bohrungsrastkerben (76) liegen in der Ebene, die durch die Mittellinien der Schwenklagerbohrung (75) und der Einhängeausnehmung (78) gebildet ist. Selbstverständlich kann der Teilungswinkel bei der vorliegenden Bohrungsrastkerbe (76) bis auf 15 Winkelgrade fallen.

Die Verbindungslasche (70) lässt sich auf dem Kombizapfen (20) in beide Drehrichtungen um 360 Winkelgrade schwenken bzw. drehen. Ggf. ist die Schwenklagerbohrung (75) feinbearbeitet, um eine vorzeitige verschleißbedingte Abnutzung des Kombizapfens (20) zu vermeiden.

Der Schwenklagerabschnitt (71) hat bereichsweise eine zylindrische Außenwandung, deren Durchmesser z.B. 54 mm beträgt. Dieser Durchmesser entspricht dem Durchmesser der Fixierscheibe (35).

Der etwas kleinere Einhängeabschnitt (77) hat als Einhängeausnehmung (78) ebenfalls eine zylindrische Bohrung mit einem Durchmesser von z.B. 34 mm. Beide Bohrungsenden sind mit einer 1x45°-Fase (79) versehen. Die teilzylindrische Außenwandung dieses Abschnitts (77) hat einen Durchmesser von z.B. 48 mm. Die parallelen Mittellinien der Schwenklagerbohrung (75) und der Einhängeausnehmung (78) haben einen Abstand von z.B. 90 mm.

Der Übergangsabschnitt (72) hat eine Breite von z.B. 35 mm. Die geometrische Mitte des Doppelknicks (73) liegt der Mittellinie der Schwenklagerbohrung (75) um z.B. 4,6 mm näher als der Mittellinie der Einhängeausnehmung (78). Der Doppelknick (73) ist so ausgeführt, dass die beiden Doppelknickau-ßenkanten jeweils mit einem 3 mm-Radius abgerundet sind. Die seitlichen Übergänge zwischen dem Übergangsabschnitt (72) und den Abschnitten (71) und (77) sind mit Radien von z.B. 10 mm ausgerundet.

Das Verriegelungselement (80) hat die Form eines Schwenkknopfes. Das einteilige Bauteil, das beispielsweise aus einem Polyamid gefertigt ist, besteht aus einer Haltescheibe (81) und einem daran angeformten Bedienknochen (87). Der z.B. 10 mm hohe Bedienknochen (87) ist der Bereich des Verriegelungselements (80), den der Tischaufsteller zum schwenkenden Verriegeln der Verbindungsvorrichtung zwischen Daumen und Zeigefinger ergreift.

Die Haltescheibe (81) ist eine 4 mm dicke Scheibe mit einem maximalen Durchmesser von z.B. 31,8 mm. Sie hat eine plane Knopfunterseite (82), die zum Rand hin eine 3 mm breite Bodenfase (83) hat, deren Phasenwinkel mit der Ebene der Knopfunterseite (82) einen Winkel von 10 Winkelgraden einschließt. Die Haltescheibe (81) hat eine kegelstumpfmantelförmige Außenwandung (88), deren Spitzenwinkel 10 Winkelgrade beträgt. Der Bedienknochen (87) bleibt mit seiner Außenwandung innerhalb der radialen Außenwandung der Haltescheibe (81).

In der Knopfunterseite (82) befindet sich eine Stufenbohrung (91), deren Mittellinie von der Mittellinie der Haltescheibe (81) z.B. 7 mm außermittig angeordnet ist. Die Stufenbohrung (91) hat einen Kopfabschnitt (92), einen Schaftabschnitt (93) und einen Führungsabschnitt (94). Der Führungsabschnitt (94), der einen Durchmesser von zum Beispiel 8 mm hat und der nach der Montage auf dem Lagerbolzen (21) am Schwenkzapfen (26) geführt ist, hat eine Tiefe von 5 mm. An ihn schließt sich der kurze Schaftabschnitt (93) an, dessen Durchmesser z.B. 5,5 mm beträgt. Die Stufenbohrung (91) endet im Kopfabschnitt (92), in den der Zylinderkopf einer Zylinderkopfschraube (95) passt, mit der das Verriegelungselement (80) in der Gewindebohrung (27) des Kombizapfens (20) verschraubt ist.

An der Knopfunterseite (82) befindet sich zwischen der Öffnung des Führungsabschnitts (94) und der Mittellinie der Haltescheibe (81) ein kreisringstückförmiges Anschlagsegment (84). Das 1,8 mm hohe Anschlagsegment (84) hat einen Zentriwinkel von 30 Winkelgrade bei einer Höhe von zum Beispiel 1,8 mm. Der Ursprung des Zentriwinkels ist die Mittellinie der Stufenbohrung (91). Die Mitte des Zentriwinkels liegt dabei in der Ebene, die zwischen der Mittellinie der Stufenbohrung (91) und der Mittellinie der Haltescheibe (81) aufgespannt ist. In dieser Ebene liegt auch eine Rastkerbe (85), in die die Endanschlagrastnase (31, 32) des Kombizapfens (20) einrastet, sofern sich das Verriegelungselement (80) in einer der beiden Endpositionen der Anschlageinsenkung (28) befindet.

Bei der Montage der Verbindungsvorrichtung wird in einem ersten Schritt in die Rückseite (43) des Kombizapfens (20) nacheinander die erste Blattfeder (63), die Rastfeder (65), die zweite Blattfeder (64) und abschließend die beiden Rastbolzen (61, 62) eingelegt. In einem zweiten Schritt wird die Verbindungslasche (70) mit der Schwenklagerbohrung (75) auf den Schwenklagerzapfen (41)-aufgeschoben, bis der Schwenklagerabschnitt (71) an der Schwenklagerplanfläche (37) der Fixierscheibe (35) anliegt. In einem dritten Schritt wird die Basisplatte (10) mit ihrer Oberseite auf die Schwenklagerplanfläche (37) aufgelegt und mittels der beiden Senkschrauben (19) mit dem Kombizapfen (20) fest verschraubt. Dabei hat die Verbindungslasche (70) zwischen der Schwenklagerplanfläche (37) und der Basisplatte (10) ein axiales Spiel von ca. 0,1 mm. Das radiale Spiel zwischen dem Schwenklagerzapfen (41) und der Schwenklagerbohrung (75) ist maximal doppelt so groß.

In einem vierten Schritt wird das Verriegelungselement (80) so auf den Schwenkzapfen (26) des Kombizapfens (20) aufgesetzt, dass sein Anschlagsegment (84) in die Anschlageinsenkung (28) des Kombizapfens (20) hineinragt. Anschließend wird das Verriegelungselement (80) mittels der Zylinderkopfschraube (95) mit dem Kombizapfen (20) verschraubt. Nun wird das Verriegelungselement (80) mit einer Drehung im Uhrzeigersinn in seine Parkposition (99) geschwenkt. Dadurch gelangen die Haltescheibe (81) und der Lagerbolzen (21) deckungsgleich übereinander, vgl. Figur 1. Die Rastkerbe (85) des Anschlagsegments (84) ist in die Endanschlagrastnase (31) der Anschlageinsenkung (28) eingerastet, vgl. Figur 6, links dargestellte Verbindungsvorrichtung.

Der Rastwiderstand dieses Gesperres ist über die Einschraubtiefe der Zylinderkopfschraube (95) regulierbar. Ggf. wird die Zylinderkopfschraube (95) in ihrer Gewindebohrung mittels Klebstoff gesichert. Alternativ kann im Lagerbolzen (21) z.B. parallel zur Führungsnut (44) eine Gewindebohrung angeordnet sein, die in die Schwenkzapfenbohrung (27) mündet. In Letztere wird ein Gewindestift mit Kegelspitze, z.B. nach DIN EN 27434, eingeschraubt, um die Zylinderkopfschraube (95) zu blockieren.

Wird auf die Einstellung des Rastwiderstandes verzichtet, kann in dem z.B. aus Kunststoff gefertigten Kombizapfen (20) die Gewindebohrung (27) durch eine metallische Gewindehülse (55) ersetzt werden, vgl. Figur 7. Die Gewindehülse (55) sitzt zentral im Schwenkzapfen (26). Sie endet mit einem breiten Gewindehülsenfuß (56) im oberen Bereich der Fixierscheibe (35). Die Gewindehülse (55), die oben bündig mit dem Schwenkzapfen (26) abschließt, hat z.B. ein M4-Innengewinde. Die in der vorigen Variante nach Figur 6 benutzte Zylinderkopfschraube (95) wird in diesem Fall durch eine Stufen-schraube (96) ersetzt. Die Stufenschraube (96) hat beispielsweise den Kopf und den gewindefreien Schaft einer M5-Zylinderkopfschraube. Am unteren Ende des Schaftes geht die Stufenschraube (96) über einen planen Anschlagbund (97) in ein M4-Außengewinde über. Nach dem Anziehen der Stufenschraube (96) stützt sich diese verliersicher auf dem Anschlagbund (97) ab. Der Schaft der Stufenschraube (96) ist z.B. 0,1 mm länger als der Schaftabschnitt (93) der Stufenbohrung (91) des Verriegelungselements (80).

Die Figur 2 zeigt eine Verbindungsvorrichtung mit einem Kombizapfen (20), der einen Einhaklagerbolzen (22) aufweist. Letzterer ist ein z.B. 10 mm hoher Zylinder mit planer Stirnfläche. Sein Durchmesser entspricht dem Durchmesser des Lagerbolzens (21) aus Figur 1. In Figur 6 ist der Einhaklagerbolzen (22) in der rechten Verbindungsvorrichtung gestrichelt eingezeichnet. Der Einhaklagerbolzen (22) lagert kein Verriegelungselement (80).

Die Figur 9 zeigt die beiden Unterseiten (5) von zwei an ihren Schmalseiten (7) nebeneinander angeordneten Tischen (1, 2), wobei die Tische mit ihren nach oben ragenden Tischbeinen (9) nur ausschnittsweise dargestellt sind. Im Bereich jeder dargestellten Tischecke ist je eine Verbindungsvorrichtung angeordnet. Die Basisplatte (10) der einzelnen Verbindungsvorrichtung ist von den beiden nächstgelegenen Tischkanten z.B. 15,5 mm entfernt. Die Kanten der Basisplatte (10) sind hierbei parallel zu den Tischkanten ausgerichtet. Die einzelnen Basisplatten (10) sind beispielsweise mit für die Befestigung an Holzwerkstoffen geeignete Senkschrauben ortsfest an den Tischplatten (3, 4) verschraubt.

Um die beiden Tische (1, 2) aus Figur 9 miteinander zu verbinden, werden bei dem hinteren Tisch (2) die Verbindungslaschen (70) so geschwenkt, dass sie über die Schmalseite (7) überstehen. Dabei sind beide Verbindungslaschen (70) über die Rastgesperre (60) an den jeweiligen Kombizapfen (20) arretiert. Das gilt auch für die Verbindungslaschen der beiden Verbindungsvorrichtungen des Tisches (1). Allerdings sind deren Verbindungslaschen (70) von der Schmalseite (7) weg geschwenkt.

Zum Verbinden der in Figur 9 dargestellten Tische (1, 2) wird der Tisch (2) z.B. mindestens 28,5 mm angehoben, um die Verbindungslaschen (70) über den Kombizapfen (20) mit seinem Verriegelungselement (80) zu bringen und abzusetzen. Bei der Verbindungsvorrichtung nach Figur 2 beträgt der Anhebungshub ca. 20 mm.

Bei regulär stehenden Tischen (1, 2) wird der Tisch (1) mit den Kombizapfen (20) und seinen Verriegelungselementen (80) über die jeweilige Einhängeausnehmung (78) der am Tisch (2) gelagerten Verbindungslasche (70) gehoben, um dann abgelassen zu werden.

Nach dem Einhängen des Tisches (2) - nach Figur 9 - liegen die Verbindungslaschen (70) des Tisches (2) auf den Fixierscheiben (35) der Kombizapfen (20) des Tisches (1) auf. Diese Position ist bei der hinteren Verbindungsvorrichtung des Tisches (1) zu erkennen. Zum Verriegeln der beiden Tische (1, 2) werden die Verriegelungselemente (80) um 180 Winkelgrade in ihre Kuppelposition (98) geschwenkt. In Figur 9 ist das bei der vorderen Verbindungsvorrichtung des Tisches (1) gezeigt, vgl. auch Figur 6, rechts angeordnete Verbindungsvorrichtung. In der Kuppelposition (98) überdeckt die Knopfunterseite (82) bereichsweise den Einhängeabschnitt (77) und ggf. auch bereichsweise den Übergangsabschnitt (72). Zwischen den Abschnitten (77, 72) und der Knopfunterseite (82) liegt - bei eben aufgestellten Tischen (1, 2) und bei identischen Tischhöhen - ein Spiel von mindestens 0,2 mm.

Das Kuppeln von zwei Tischen (1, 2) funktioniert problemlos, wenn sich die beiden Tischplatten (3, 4) gegenüber einer vorzugsweise ebenen Aufstellfläche in gleicher Höhe befinden. Nur dann ist gewährleistet, dass die Möbelstücke (1, 2) in nur einer geometrischen Ebene (6) miteinander verbunden werden können. Im Ausführungsbeispiel ist diese geometrische Ebene (6) die Ebene, in der sich die Tischunterseiten (5) der Tischplatten (3,4) befinden. Selbstverständlich können die Tischunterseiten im Bereich von z.B. ± 1 mm höhenversetzt aufgestellt sein. Auch können die Tischplatten Neigungswinkel von z.B. ± 0,5 Winkelgraden gegeneinander einnehmen. Sind größere Höhenversätze oder Neigungswinkel erwünscht, können beispielsweise entweder die Wandstärken der Lagerbolzen (21) und der Schwenkzapfen (26) vergrößert werden oder die Verbindungslasche erhält im Bereich zwischen dem Schwenklagerabschnitt (71) und dem Einhängeabschnitt (77) eine ausgleichende Gelenksstelle. Die Gelenksstelle kann mit Anschlägen oder elastischen Rückstellelementen versehen sein, um ein zu großes Herabhängen des zum Kuppeln nicht benötigten Einhängeabschnitts (77) zu vermeiden.

### Bezugszeichenliste:

- 1, 2: Tisch, Möbelstück
- 3, 4: Tischplatte
- 5: Unterseite, Möbelstückunterseite; Tischplattenoberfläche, unten
- 6: Ebene, geometrisch
- 7: Schmalseite
- 9: Tischbein, Möbelbein, Tischfuß

- 10: Basisplatte
- 11: Oberseitenbohrung, Senkbohrung
- 12: Unterseitenbohrung, Senkbohrung
- 19: Senkschraube

- 20: Kombizapfen
- 21: Lagerbolzen
- 22: Einhaklagerbolzen
- 23: Außenwandung, zylindrisch
- 24: Lagerbolzenstirnfläche
- 26: Schwenkzapfen
- 27: Schwenkzapfenbohrung, Gewindebohrung
- 28: Anschlageinsenkung
- 31, 32: Endanschlagrastnase, Halbzylindermantel

- 35: Fixierscheibe
- 36: Auflageplanfläche
- 37: Schwenklagerplanfläche

- 41: Schwenklagerzapfen
- 42: Zapfenaußenwandung, zylindrisch
- 43: Schwenklagerstirnfläche, Rückseite
- 44: Führungsnut, Profilquernut
- 45: Hintergriffe

- 47: Blattfederaussparung
- 48: Planwandung
- 49: Wölbungsfläche, Wandung

- 51: Gewindebohrung
- 55: Gewindehülse
- 56: Gewindehülsenfuß

- 60: Rastgesperre, Doppelgesperre
- 61, 62: Rastbolzen, Sperrer, Rastgesperreteil
- 63, 64: Blattfeder
- 65: Rastfeder, Schraubendruckfeder, Rastgesperreteil
- 69: Mittellinie

- 70: Verbindungslasche, Schwenklasche
- 71: Schwenklagerabschnitt
- 72: Übergangsabschnitt
- 73: Doppelknick
- 75: Schwenklagerbohrung, Sperrstück
- 76: Bohrungsrastkerbe
- 77: Einhängeabschnitt
- 78: Einhängeausnehmung
- 79: Fase

- 80: Verriegelungselement, Schwenkknopf
- 81: Haltescheibe
- 82: Knopfunterseite
- 83: Bodenfase
- 84: Anschlagsegment
- 85: Rastkerbe
- 87: Bedienknochen
- 88: Außenwandung, Seitenwandung
- 91: Stufenbohrung
- 92: Kopfabschnitt
- 93: Schaftabschnitt
- 94: Führungsabschnitt

- 95: Zylinderkopfschraube
- 96: Stufenschraube
- 97: Anschlagbund

- 98: Kuppelposition, Verriegelungsposition
- 99: Parkposition

## Patentansprüche

1. Vorrichtung zum lösbaren und einhängenden Verbinden von mindestens zwei benachbart anordenbaren Möbelstücken (1, 2) in einer geometrischen Ebene (6), wobei die Vorrichtung einen ortsfesten Kombizapfen (20), eine Verbindungslasche (70) und ein Verrigelungselement (80) aufweist,
- wobei jedes der zu verbindenden Möbelstücke (1, 2) am ortsfesten Kombizapfen (20) die daran schwenkbare - in mindestens einer Position verrastenden - Verbindungslasche (70) lagert,
- wobei die Verbindungslasche (70) an ihrem freien Ende eine Einhängeausnehmung (78) hat,
- wobei der Kombizapfen (20) einen Lagerbolzen (21) aufweist,
- wobei der Kombizapfen (20) eines ersten Möbelstücks (1) in die Einhängeausnehmung (78) der Verbindungslasche (70) eines zweiten Möbelstücks (2) eingehängt oder eingehängt und mittels eines Verriegelungselements (80) verriegelt ist,
- **dadurch gekennzeichnet, dass** das Verriegelungselement (80) ein Schwenkknopf ist, der exzentrisch auf dem Kombizapfen (20) schwenk- und verrastbar gelagert ist.

2. Vorrichtung gemäß Anspruch 1, **dadurch gekennzeichnet, dass** der Kombizapfen (20) - zur schwenkbaren Lagerung der Verbindungslasche (70) - einen Schwenklagerzapfen (41) aufweist, der eine zum Lagerbolzen (21) deckungsgleiche Mittellinie aufweist.

3. Vorrichtung gemäß Anspruch 2, **dadurch gekennzeichnet, dass** der Lagerbolzen (21) über eine Fixierscheibe (35) mit dem Schwenklagerzapfen (41) verbunden ist, wobei an der Fixierscheibe (35) die vorrichtungseigene Verbindungslasche (70) verliersicher axial fixiert ist.

4. Vorrichtung gemäß Anspruch 1, **dadurch gekennzeichnet, dass** die Verbindungslasche (70) eine Schwenklagerbohrung (75) hat, die mindestens eine Bohrungsrastkerbe (76) aufweist.

5. Vorrichtung gemäß Anspruch 1, **dadurch gekennzeichnet, dass** der Kombizapfen (20) mindestens einen gegenüber seiner Mittellinie (69) radial wirkenden federbelasteten Sperrer (61, 62) eines Rastgesperres (60) aufweist, der in eine Bohrungsrastkerbe (76) der Schwenklagerbohrung (75) einrastbar ist.

6. Vorrichtung nach mindestens einem der vorangegangenen Ansprüche, **dadurch gekennzeichnet, dass** der einzelne Sperrer (61, 62) im Kombizapfen (20) an einer querliegenden Blattfeder (63, 64) anliegt, deren Federwirkung durch ein nachgeschaltetes Federelement (65) in Form einer Schraubenfeder verstärkt wird.

7. Vorrichtung nach mindestens einem der vorangegangenen Ansprüche, **dadurch gekennzeichnet, dass** im Kombizapfen (20) in einer geraden Führungsnut (44) zwei entgegengesetzt wirkende Sperrer (61, 62) schwimmend blattfederzentriert gelagert sind.

8. Vorrichtung gemäß Anspruch 1, **dadurch gekennzeichnet, dass** der Kombizapfen (20) auf einer Basisplatte (10) montiert ist.

9. Vorrichtung gemäß Anspruch 8, **dadurch gekennzeichnet, dass** sie zumindest in den Möbelstückecken an den Möbelstückunterseiten (5) über ihre Basisplatten (10) befestigt ist.

## Claims

1. A device for the detachable and hooked-in connection of at least two adjacently arranged pieces of furniture (1, 2) in a geometric plane (6), wherein the device has a stationary combination journal (20), a connection lug (70) and a locking element (80),
- wherein each of the pieces of furniture (1, 2) to be connected supports the connection lug (70) on the stationary combination journal (20), which connection lug can be pivoted thereon and latches in at least one position,
- wherein the connection lug (70) has a hook-in cut-out (78) at the free end thereof,
- wherein the combination journal (20) has a bearing pin (21),
- wherein the combination journal (20) of a first piece of furniture (1) is hooked into the hook-in cut-out (78) of the connection lug (70) of a second piece of furniture (2) or is hooked in and locked by means of a locking element (80),
- **characterised in that**
the locking element (80) is a pivot knob which is pivotably and latchably mounted eccentrically on the combination journal (20).

2. The device according to Claim 1,
**characterised in that**
the combination journal (20) has, for pivotable mounting of the connection lug (70), a pivot bearing journal (41), which has a centre line congruent with the bearing pin (21).

3. The device according to Claim 2,
**characterised in that**
the bearing pin (21) is connected to the pivot bearing journal (41) via a fixing plate (35), wherein the connection lug (70) of the device is axially fixed captively on the fixing plate (35).

4. The device according to Claim 1,
**characterised in that**
the connection lug (70) has a pivot bearing bore (75), which has at least one bore latching notch (76).

5. The device according to Claim 1,
**characterised in that**
the combination journal (20) has at least one springloaded detent (61, 62) of a latching catch mechanism (60), which detent acts radially relative to the centre line (69) of the combination journal and can latch into a bore latching notch (76) of the pivot bearing bore (75).

6. The device according to at least one of the preceding claims,
**characterised in that**
the individual detent (61, 62) in the combination journal (20) bears against a transverse leaf spring (63, 64), the spring effect of which is reinforced by a downstream spring element (65) in the form of a helical spring.

7. The device according to at least one of the preceding claims,
**characterised in that**
in the combination journal (20), two detents (61, 62) acting in opposite directions are mounted in a floating, leaf-spring-centred manner in a straight guide groove (44).

8. The device according to Claim 1,
**characterised in that**
the combination journal (20) is mounted on a baseplate (10).

9. The device according to Claim 8,
**characterised in that**
it is fastened to the undersides (5) of the pieces of furniture, at least in the corners of the pieces of furniture, via its baseplates (10).

## Revendications

1. Dispositif, destiné à assembler de manière amovible et par accrochage au moins deux pièces de meuble (1, 2), susceptibles d'être placées côte à côte dans un plan géométrique (6), le dispositif comportant un tenon mixte (20) stationnaire, une patte d'assemblage (70) et un élément de verrouillage (80),
- chacune des pièces de meuble (1, 2) à assembler logeant sur le tenon mixte (20) stationnaire la patte d'assemblage (70) pivotante sur celle-ci en s'encliquetant dans au moins une position,
- la patte d'assemblage (70) disposant sur son extrémité libre d'un évidement d'accrochage (78),
- le tenon mixte (20) comportant un axe de palier (21),
- le tenon mixte (20) d'une première pièce de meuble (1) étant accroché ou accroché et verrouillé au moyen d'un élément de verrouillage (80) dans l'évidement d'accrochage (78) de la patte d'assemblage (70) d'une deuxième pièce de meuble (2),
- **caractérisé en ce que** l'élément de verrouillage (80) est un bouton pivotant, qui est logé de manière excentrique sur le tenon mixte (20) en étant susceptible de pivoter et de s'encliqueter.

2. Dispositif selon la revendication 1, **caractérisé en ce que**, pour le logement en pivotement de la patte d'assemblage (70), le tenon mixte (20) comporte un tourillon de pivot (41) qui comporte une ligne médiane qui coïncide avec l'axe de palier (21).

3. Dispositif selon la revendication 2, **caractérisé en ce que** l'axe de palier (21) est assemblé par l'intermédiaire d'un disque de fixation (35) avec le tourillon de pivot (41), la patte d'assemblage (70) propre au dispositif étant fixée en direction axiale, de manière imperdable sur le disque de fixation (35).

4. Dispositif selon la revendication 1, **caractérisé en ce que** la patte d'assemblage (70) dispose d'un perçage de pivot (75), qui comporte au moins un cran (76) de perçage.

5. Dispositif selon la revendication 1, **caractérisé en ce que** le tenon mixte (20) comporte au moins un bloqueur (61, 62) contraint par ressort d'un système d'encliquetage (60) agissant en direction radiale à l'encontre de sa ligne médiane (69), qui est encliquetable dans un cran (76) de perçage du perçage de pivot (75).

6. Dispositif selon au moins l'une quelconque des revendications précédentes, **caractérisé en ce que** le bloqueur (61, 62) individuel s'appuie sur le tenon mixte (20) sur un ressort à lame (63, 64) situé à la transversale, dont l'effet de ressort est renforcé par un élément à ressort (65) situé en aval, sous la forme d'un ressort hélicoïdal.

7. Dispositif selon au moins l'une quelconque des revendications précédentes, **caractérisé en ce que** dans le tenon mixte (20), deux bloqueurs (61, 62) à action opposée sont logés de manière flottante et centrée par rapport au ressort à lame dans une rainure de guidage (44) droite.

8. Dispositif selon la revendication 1, **caractérisé en ce que** le tenon mixte (20) est monté sur une plaque d'embase (10).

9. Dispositif selon la revendication 8, **caractérisé en ce qu'**il est fixé au moins dans les angles des pièces de meuble sur les faces inférieures (5) des pièces de meuble par l'intermédiaire de ses plaques d'embase (10).
